# EUROPEAN PATENT APPLICATION

(11) **EP 1 701 532 A1**
(43) Date of publication of application: **13.09.2006**
(21) Application number: 06251117.5
(22) Date of filing: 01.03.2006
(51) Int. Cl.: H04N 1/00, H04N 1/32

(54) **Imaging apparatus with adaptive user interface control**

(30) Priority: 07.03.2005 JP 2005063192
(71) Applicant: Ricoh Company, Ltd., Tokyo 143-8555 (JP)
(72) Inventor: Hashimoto, Tetsuya, Ohta-ku Tokyo 143-8555 (JP)
(74) Representative: Leeming, John Gerard

(57) **Abstract**

An imaging apparatus has a first determination device to determine whether or not an external printing device responds to a function, which prints arbitrary character information recorded in an image data, a second determination device to determine whether or not the imaging apparatus has a function, which displays the arbitrary character information recorded in the image data, and a display device to display a print setting item, which allows a user to select whether or not to print the arbitrary character information, on a print setting screen, if it is determined that the external printing device responds to the function by the first determination device and if it is determined that the imaging apparatus has the function by the second determination device, when printing.

## Description

The present invention relates to an imaging apparatus and a display method of an imaging apparatus, more particularly, to an imaging apparatus having functions, which control printing of character information to be contained in a photographed image and control a print setting screen, and a display method of an imaging apparatus.

Recently, there has been provided an imaging apparatus such as a digital camera capable of recording character information, voice information, a line drawing, etc., displaying them, and printing such character information, voice information, a line drawing, etc., by a printer, in addition to a photographed image output by photographing a photographic subject. For instance, there has been disclosed a technique, which prints image-related information recorded simultaneously with an image of a photographic subject by an digital camera on a recording paper by a printer (reference to JP-A-H11-146311). In addition, if the imaging apparatus comprises a correspondence function, the imaging apparatus can record arbitrary letter strings as character information, and display them. A printing system of a photographed image, etc., is not limited to a system, which connects an imaging apparatus to a printing device through a computer. There has been developed a system (so-called "direct printing system"), which directly connects an imaging apparatus to a printing device, for direct printing.

Conventionally, in such a direct printing system, a setting screen to a printer is displayed on the imaging apparatus in accordance with a correspondence function of a printer. In this case, if the printer comprises a function corresponding to a print layout, 1 frame, 4 frames and index, for example, the imaging apparatus displays the setting screen of layout such that a user can select 1 frame, 4 frames or an index. If the printer comprises a function corresponding to printing of arbitrary character information of a photographed image, the imaging apparatus displays an arbitrary character printing screen such that a user can select whether to print or not.

For example, in an digital camera capable of selecting whether to print only image data or to print image data with additional information when photographing, there has been disclosed a direct printing system comprising a device that a user can select a mode from the above two printing modes, a device capable of printing a reverse image of an image, and a device, which prints only a reverse image without printing additional information although the mode for printing an image with additional information is selected, if printing of a reverse image of an image is instructed (reference to JP-A-H11-88815).

Furthermore, there has been disclosed a direct printing system, which converts image data to data adopted to a printer based on drawing information sent from the printer, and then sends the data by a synchronized signal adopted to the printer (reference to JP-A-2004-96761).

By the way, in the above conventional imaging apparatus and display method, for example, if the direct printing system, which directly connects a digital camera to a printer so as to print an image of the digital camera, is used, the setting screen to the printer is displayed in accordance with the correspondence function of the printer as stated above, and the setting screen of a print layout is displayed on the digital camera, for example, such that a user can select a setting item. In this case, if the printer comprises a function corresponding to printing of arbitrary character information of a photographed image, the imaging apparatus displays a arbitrary character printing screen such that the user can select whether to print or not.

However, when the digital camera does not comprise a function, which displays arbitrary character information, a user can not confirm the contents of printing before printing, resulting in mis-printing in some instances.

In addition, even though the layout, which can not print the arbitrary character information, is selected, the screen, which allows a user to select whether or not to print the arbitrary character information, is displayed. Therefore, in some cases, the user may select the designation, which prints the arbitrary character information, by mistake. Additionally, the user remains unknown whether or not to print the arbitrary character information at which layout.

The present invention has been made in consideration of above mentioned actualities; thus, an aim of the present invention is to provide an imaging apparatus capable of preventing mis-printing of a user, when a digital camera does not have a function, which displays arbitrary character information, and a display method of an imaging apparatus.

It is another aim of the present invention to provide an imaging apparatus capable of preventing mis-printing of a user.

It is still another aim of the present invention to provide an imaging apparatus capable of preventing mis-determination of a user.

It is yet another aim of the present invention to provide an imaging apparatus capable of simplifying a circuit structure and responding to change in a specification by changing a control program.

It is further aim of the present invention to provide an imaging apparatus with simple print setting.

It is still further aim of the present invention to provide a display method capable of preventing mis-printing of a user.

It is yet further aim of the present invention to provide a display method capable of preventing mis-determination of a user.

It is another aim of the present invention to provide a display method capable of simplifying a logic structure and responding to change in a specification by changing a control program.

It is still another aim of the present invention to provide a display method capable of preventing mis-printing with simple print setting.

According to one aspect of the present invention, an imaging apparatus including an imaging device, which images a photograph subject to output as image data, a recording device, which records the image data as an image file, a sending device, which sends data to an external printing device, a device, which displays arbitrary character information recorded in the image data, a device, which receives print settable information of the external printing device, and a device, which displays a print setting screen, comprises: a first determination device configured to determine whether or not the external printing device responds to a function, which prints the arbitrary character information recorded in the image data; a second determination device configured to determine whether or not the imaging apparatus has a function, which displays the arbitrary character information recorded in the image data; and a display device configured to display a print setting item, which allows a user to select whether or not to print the arbitrary character information, on the print setting screen, if it is determined that the external printing device responds to the function, which prints the arbitrary character information recorded in the image data, by the first determination device and if it is determined that the imaging apparatus has the function, which displays the arbitrary character information recorded in the image data, by the second determination device, when printing.

In one embodiment of the present invention, the first determination device refers to an accessible print setting item of the external printing device to be sent from the external printing device when determining.

In one embodiment of the present invention, the second determination device refers to a control program when determining.

According to another aspect of the present invention, an imaging apparatus including an imaging device, which images a photographic subject to output as image data, a recording device, which records the image data as an image file, a sending device, which sends data to an external printing device, and a device, which displays a print setting screen corresponding to an accessible print setting item of the external printing device received from the external printing device, comprises a display device configured to display a print setting item, which allows a user to select whether or not to print arbitrary character information, on the print setting screen, only if a layout capable of printing an arbitrary character is selected in a layout setting of the print setting item.

According to further aspect of the present invention, a display method of an imaging apparatus including an imaging device, which images a photographic subject to output as image data, a recording device, which records the image data as an image file, a sending device, which sends data to an external printing device, a device, which displays arbitrary character information recorded in the image data, a device, which receives print settable information of the external printing device, and a device, which displays a print setting screen, comprises: a first determination step of determining whether or not the external printing device responds to a function, which prints the arbitrary character information recorded in the image data; a second determination step of determining whether or not the imaging apparatus has a function, which displays the arbitrary character information recorded in the image data; and a display step of displaying a print setting item, which allows a user to select whether or not to print the arbitrary character information, on the print setting screen, only if it is determined that the external printing device responds to the function, which prints the arbitrary character information recorded in the image data, by the first determination step, and it is determined that the imaging apparatus has the function, which displays the arbitrary character information recorded in the image data, by the second determination step, when printing.

In one embodiment of the present invention, the first determination step refers to an accessible print setting item of the external printing device to be sent from the external printing device when determining.

In one embodiment of the present invention, the second determination step refers to a control program when determining.

According to still further aspect of the present invention, a display method of an imaging apparatus including an imaging device, which images a photographic subject to output as image data, a recording device, which records the image data as an image file, a sending device, which sends data to an external printing device, and a device, which displays a print setting screen corresponding to an accessible print setting item of the external printing device received from the external printing device, comprises a display step of displaying a print setting item, which allows a user to select whether or not to print arbitrary character information, on the print setting screen, only if a layout capable of printing an arbitrary character is selected in a layout setting of the print setting item.

According to the imaging apparatus of the present invention, the first determination device determines whether or not the external printing device responds to the function, which prints the arbitrary character information recorded in the image data, and the second determination device determines whether or not the imaging apparatus has the function, which displays the arbitrary character information recorded in the image data. The print setting item, which allows a user to select whether or not to print the arbitrary character information, is displayed on the print setting screen, if the external printing device responds to the function, which prints the arbitrary character information recorded in the image data and the imaging apparatus has the function, which displays the arbitrary character information recorded in the image data, when printing. Also, if the imaging apparatus does not have the function, which displays the arbitrary character information, or the printer does not have the function, which prints the arbitrary character information, the print setting item, which selects the printing of the arbitrary character information, is not displayed on the print setting screen. Therefore, mis-printing of a user can be prevented.

According to the imaging apparatus of the present invention, since the first determination device refers to the accessible print setting item of the external printing device to be sent from the external printing device when determining, if information that the printer does not have the function, which prints the arbitrary character information, is received from the printer, the print setting item, which selects to print the arbitrary character information, is not displayed on the print setting screen. Thus, it is possible to prevent mis-printing by mis-determination of a user.

According to the imaging apparatus of the present invention, the second determination device refers to the control program when determining; thus, a circuit structure can be simplified, and also it is possible to respond to change in a specification by changing the control program.

According to the imaging apparatus of the present invention, since the print setting item, which allows a user to select whether or not to print the arbitrary character information, is displayed on the print setting screen, only if the layout capable of printing the arbitrary character is selected in the layout setting of the print setting item, the availability of the printing of the arbitrary character information can be confirmed, and the mis-selecting of the printing setting item of a user can be prevented.

According to the display method of an imaging apparatus of the present invention, the first determination device determines whether or not the external printing device responds to the function, which prints the arbitrary character information recorded in the image data, and the second determination device determines whether or not the imaging apparatus has the function, which displays the arbitrary character information recorded in the image data. The print setting item, which allows a user to select whether or not to print the arbitrary character information, is displayed on the print setting screen, only if the external printing device responds to the function, which prints the arbitrary character information recorded in the image data, and the imaging apparatus has the function, which displays the arbitrary character information recorded in the image data, when printing. If the imaging apparatus does not have the function, which displays the arbitrary character information, or the printer does not have the function, which prints the arbitrary character information, the print setting item, which selects to print the arbitrary character information, is not displayed on the print setting screen. Therefore, the setting that the arbitrary character information is printed is confirmed by a user, and mis-printing of a user can be prevented.

According to the display method of an imaging apparatus of the present invention, the first determination step refers to the accessible print setting item of the external printing device to be sent from the external printing device when determining, and if the information that the printer does not have the function, which prints the arbitrary character information is received from the printer, the print setting item, which selects to print the arbitrary character information, is not displayed on the print setting screen. Therefore, the mis-printing by mis-determination of a user can be prevented.

According to the display method of an imaging apparatus of the present invention, the second determination step refers to the control program when determining; thus, a logic structure is simplified, and it is possible to respond to change in a specification by changing the control program.

According to the display method of an imaging apparatus of the present invention, since the print setting item, which allows a user to select whether or not to print the arbitrary character information, is displayed on the print setting screen, only if the layout capable of printing the arbitrary character is selected by the layout setting of the print setting item. Therefore, the availability of the printing of the arbitrary character information is confirmed, and mis-printing can be prevented.

An exemplary embodiment of the present invention will be described below with reference to the accompanying drawings, in which:
Fig. 1A is a plan view illustrating an external appearance of an imaging apparatus according to an embodiment of the present invention.
Fig. 1B is a front view illustrating an external appearance of an imaging apparatus according to an embodiment of the present invention.
Fig. 1C is a back view illustrating an external appearance of an imaging apparatus according to an embodiment of the present invention.
Fig. 2 is a block diagram illustrating major circuit structures of the imaging apparatus according to an embodiment of the present invention.
Fig. 3 is a view showing an example of a setting screen to be displayed on a monitor of the imaging apparatus according to the embodiment of the present invention.
Fig. 4 is a view showing another example of a setting screen to be displayed on the monitor of the imaging apparatus according to the embodiment of the present invention.
Fig. 5 is a view showing another example of a setting screen to be displayed on the monitor of the imaging apparatus according to the embodiment of the present invention.
Fig. 6 is a view showing one example of a setting screen to be displayed on the monitor of the imaging apparatus according to the embodiment of the present invention.
Fig. 7 is a view showing another example of a setting screen to be displayed on the monitor of the imaging apparatus according to the embodiment of the present invention.
Fig. 8 is a view showing another example of a setting screen to be displayed on the monitor of the imaging apparatus according to the embodiment of the present invention.
Fig. 9 is an explanation view explaining a printing format of a form print of one of print setting items of the imaging apparatus according to the embodiment of the present invention.
Fig. 10 is a flow chart showing one example of a process procedure till character information corresponding to image data is displayed in the imaging apparatus according to the embodiment of the present invention.
Fig. 11 is an explanation view showing a display state of camera memo information in the imaging apparatus according to the embodiment of the present invention.
Fig. 12 is a flow chart illustrating one example of a process procedure till it is determined whether or not to display a print setting item in the imaging apparatus according to the embodiment of the present invention.
Fig. 13 is a flow chart showing one example of a process procedure till a print setting screen is displayed in the imaging apparatus according to the embodiment of the present invention.
Fig. 14 is an explanation view showing one example of a print setting screen when form camera memo printing is available in the imaging apparatus according to the embodiment of the present invention.
Fig. 15 is a flow chart illustrating one example of a process procedure till it is determined whether or not a camera memo is displayed on a print setting screen in the imaging apparatus according to the embodiment of the present invention.

Hereinafter, embodiments of an imaging apparatus and a display method of an imaging apparatus (hereinafter, sometimes referred to as a display method) according to the present invention will be described with reference to the drawings.

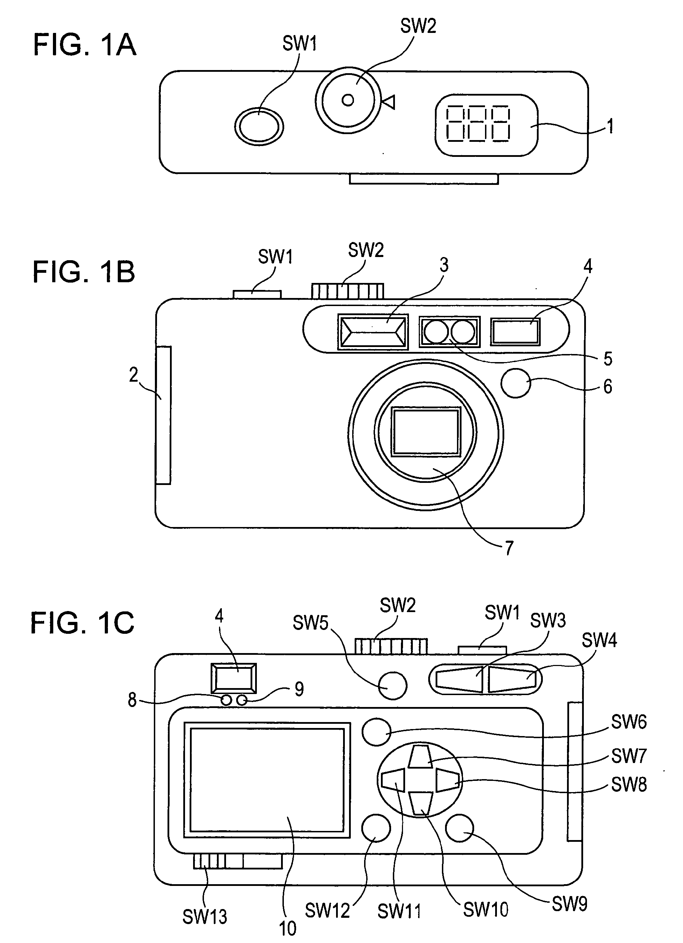

Figs. 1A, 1B, 1C are external appearances of an imaging apparatus according to an embodiment of the present invention. Fig. 1A is a plane view, Fig. 1B is a front view, and Fig. 1C is a back view. In Figs. 1A, 1B, 1C, the imaging apparatus of the embodiment of the present invention (in this case, digital camera) comprises a sub LCD 1 of a display screen, a SD card/battery lid 2, a stroboscopic flash portion 3, an optical finder 4, a measurement unit 5, a remote control light receiving portion 6, a lens barrel unit 7, an AF-LED 8, a stroboscopic LED 9, and an LED monitor 10, as major mechanical structural elements for the external appearance.

Moreover, as a switch and an operation device, the imaging apparatus according to the embodiment of the present invention comprises a release shutter SW1, a mode dial SW2, a ZOOM-SW (WIDE) SW3, a ZOOM-SW (TELE) SW4, a self timer/delete SW (SW5), a MENU-SW (SW6), an up/strobe SW (SW7), a right/strobe SW (SW8), a DISPLAY-SW (SW9), a down/macro SW (SW10), a left/image confirmation SW (SW11), an OK-SW (SW12) and a power supply SW (SW13).

In addition, the external appearances of the imaging apparatus according to the present invention are not limited to the external appearances shown in Figs. 1A, 1B, 1C. The external appearances can be another external appearance.

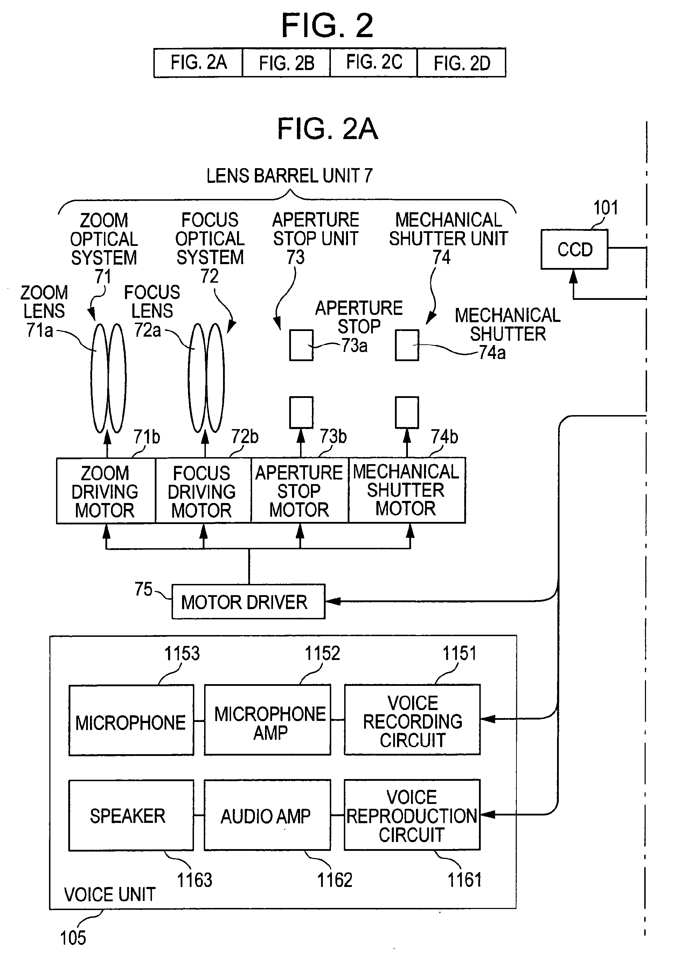

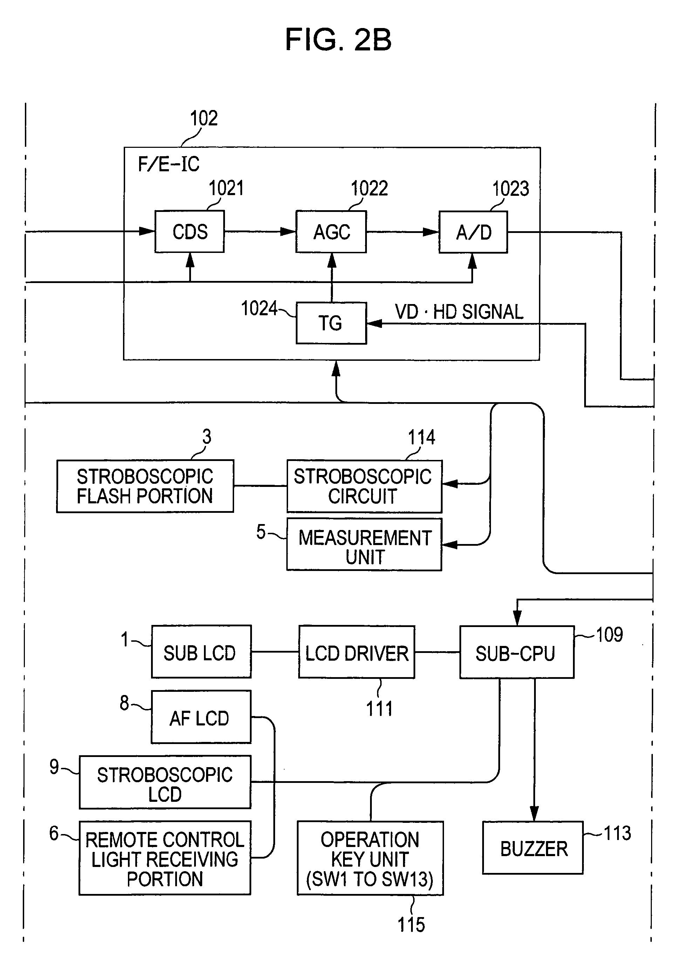

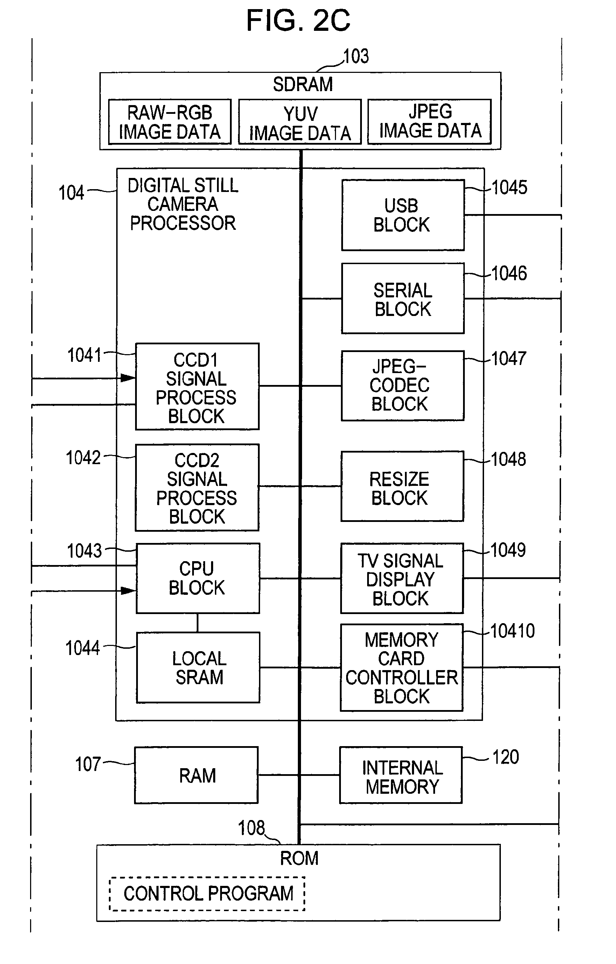

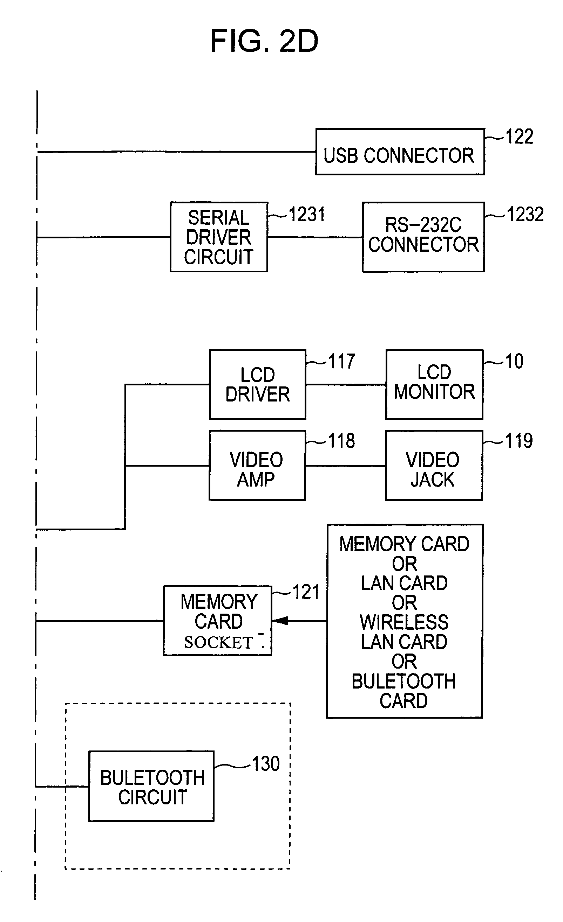

Fig. 2 is a block diagram showing major circuit structures of the imaging apparatus according to the embodiment of the present invention. Fig. 2 uses the same reference numbers appended in Fig. 1 for the circuit elements, which operate the mechanical elements shown in Fig. 1. In the present embodiment, it will be explained when printing is carried out in accordance with Bluetooth standard; however, the present invention is generally practicable for a connecting method other than Bluetooth standard.

In Fig. 2, the imaging apparatus (digital camera) of the present embodiment comprises the lens barrel unit 7, a F/E (front-end)-IC 102, a SDRAM 103, which stores various image data, a digital still camera processor 104, a RAM 107, a ROM 108, which stores a control program, a SUB-CPU 109, a voice unit 105, which inputs and outputs voice information, and a Bluetooth circuit 130, which allows connection by Bluetooth standard, as major circuit elements. In addition, the imaging apparatus comprises the sub LCD 1, the stroboscopic flash portion 3, the measurement unit 5, the remote control light receiving portion 6, the AF-LED 8, the stroboscopic LED 9, the LCD monitor 10, a buzzer 113, a stroboscopic circuit 114, an operation Key unit 115 in which SW1-13 are disposed, an LCD driver 111, a video AMP 118, a video jack 119, an internal memory 120, a memory card socket 121, a USB connector 122, a serial driver circuit 1231, and an RS-232C connector 1232, as other circuit elements.

The lens barrel unit 7 comprises a zoom optical system 71 having a zoom lens 71a and a zoom driving motor 71b, a focus optical system 72 having a focus lens 72a and a focus driving motor 72b, an aperture stop unit 73 having an aperture stop 73a and an aperture stop motor 73b, a mechanical shutter unit 74 having a mechanical shutter 74a and a mechanical shutter motor 74b, and a motor driver 75.

The F/E-IC 102 comprises a CDS 1021, which eliminates image noise, an AGC 1022, which conducts an automatic gain control, an A/D 1023, which converts an analogue signal to a digital signal, and a TG 1024, which produces a driving timing signal.

The digital still camera processor 104 comprises a CCD signal processing block 1041, a CCD2 signal processing block 1042, a CPU block 1043, a Local-SRAM 1044 capable of recording image data, etc., a USB block 1045, a serial block 1046, a JPEG-CODEC block 1047, a RESIZE block 1048, a TV signal display block 1049, and a memory card control block 10410.

The voice unit 105 comprises a voice recording circuit 1151, a microphone AMP 1152, a microphone 1153, a voice reproduction circuit 1161, an audio AMP 1162, and a speaker 1163.

In addition, the memory card socket 121 is a socket for placing at least a memory card, a LAN card, a wireless LAN card, and a Bluetooth standard card. The imaging apparatus according to the present embodiment can be connected to a printing device of an external device via the USB connector 122 pursuant to USB standard, and also can be connected by using a connector and a connection cable pursuant to Bluetooth standard.

If the imaging apparatus is connected to a device of Bluetooth standard, the imaging apparatus is connected via the Bluetooth circuit 130 (option). If the Bluetooth circuit 130 is not used, the imaging apparatus can be connected to the external device of Bluetooth standard by connecting the Bluetooth card to the memory card socket 121. The connection to Ethernet (registered trade mark) is carried out by an Ethernet (registered trade mark) connection circuit or a wireless Ethernet connection circuit (option, not shown). If the Ethernet (registered trade mark) circuit is not used, the imaging apparatus can be connected to a network by connecting the LAN card or the wireless LAN card to the memory card socket 121.

Below, the imaging apparatus (digital camera) according to the present embodiment and a printer are connected pursuant to USB standard.

In addition, the circuit structures of the imaging apparatus according to the present invention are not limited to the circuit structures shown in Fig. 2.

Hereinafter, general operation of the imaging apparatus (digital camera) according to the present embodiment will be explained with reference to FIGS. 1, 2.

The motor driver 75 is driven and controlled by a driving command from the CPU block 1043 in the digital still camera processor 104 based on the input of the remote control light receiving portion 6 and the operation input of the operation Key unit 115 in which SW1-SW13 are disposed.

The ROM 108 is stored with a control program written by a code readable by the CPU block 1043, parameter required for control, etc. If the power supply of the present apparatus (digital camera) becomes an ON state, the control program, etc., are loaded in a main memory (not shown), and the CPU block 1043 controls the operation of each of the structural elements of the present apparatus in accordance with the loaded program, and temporary saves the data, etc., required for control in the RAM 107 and the Local-SRAM 1044 of the digital still camera processor 104, and stores them. The control program and control parameter can be changed by constituting the ROM 108 with a rewritable flash ROM; thus, the function of the present device is easily upgraded.

The CCD 101 is a solid-state image sensor for photoeletrically converting an optical image, and operates by a driving timing signal to be output by the TG (1024). The F/E-IC 102 comprises the CDS 1021, which conducts correlation double sampling for eliminating image noise, the AGC 1022, which conducts gain adjustment, the A/D 1023, which performs digital signal conversion, and the CCD 1 signal processing block 1041. Each of the circuit elements operates by the driving timing signal to be output by the TG 1024.

In addition, the TG 1024 is provided with a vertical synchronized signal (hereinafter, referred to as VD) and a horizontal synchronized signal (hereinafter, referred to as HD) from the CCD1 signal processing block 1041 and is controlled by the CPU block 1043 to output the driving timing signal.

The digital still camera processor 104 conducts a white balance setting and a gamma setting to image data to be output through the F/E-IC 102 from the CCD 101. In addition, as described above, the CCD1 signal processing block 1041 supplies the VD signal and the HD signal to the TG 1024.

The CCD2 signal processing block 1042 performs a conversion process to luminous data and colour data with respect to the image data input by a filtering process. The CPU block 1043 controls the operation of each of the structural elements of the present device. The Local-SRAM 1044 temporary stores data required for control in the CPU block 1043, etc. The USB block 1045 carries out communication pursuant to USB standard with an external device such as a personal computer (hereinafter, referred to as a PC).

The serial block 1046 conducts serial communication with an external device such as a PC.

The JPEG-CODEC block 1047 performs JPEG compression and expansion. The RESIZE block 1048 expands and reduces the size of image data by an interpolation process.

The TV signal display block 1049 converts the image data (signal) to a video signal capable of displaying on an external display device such as a liquid crystal monitor and TV (television receiver).

The memory card controller block 10410 controls a memory card for recording photographed image data.

The SDRAM 103 temporary saves the image data when the digital still camera processor 104 conducts various conversion processes to the image data, and stores the image data. The types of image data to be stored comprise image data loaded from the CCD 101 through the F/E-IC 102, for example. Specifically, the types of the image data include "RAW-RGB image data" with the white balance setting and gamma setting are performed by the CCD1 signal processing block 1041, "YUV image data" with the luminance data and colour data conversion is conducted by the CCD2 control block 1042, and "JPEG image data" with the JPEG compression is carried out by the JPEG-CODEC block 1047.

The memory card socket 121 is a socket, which places a detachable memory card. The types of detachable memory card are as described above.

The internal memory 120 is a memory, which can store photographed image data when a memory card is not placed to the memory card socket 121.

The LCD driver 117 is a drive circuit, which drives the after-mentioned LCD monitor 10, having a function for converting a video signal to be output from the TV signal display block 1049 to a signal for displaying on the LCD monitor 10. The LCD monitor 10 observes a condition of a photographic subject before photographing, and confirms the photographed image to display the image data recorded in the memory card and the internal memory 120.

The video AMP 118 is an amplifier, which converts a video signal to be output from the TV signal display block 1049 at 75Ω impedance. The video jack 119 is a jack, which connects the imaging apparatus to an external display device such as a TV. The USB connector 122 is a connector, which conducts USB connection with an external device such as a personal computer. The serial driver circuit 1231 is a circuit, which conducts voltage conversion of the output signal of the serial block 1046, so as to conduct serial communication with an external device such as a personal computer. The RS-232C connector 1232 is a connector, which conducts serial connection with an external device such as a personal computer.

The SUB-CPU 109 is a CPU that ROM and RAM are built in one chip, and also the CPU outputs the signals to be output from the operation key unit 115 and remote control light receiving portion 6 to the CPU block 1043 as operation information of a user. In addition, the SUB-CPU 109 converts a camera condition to be output from the CPU block 1043 to a control signal for controlling the sub LCD 1, AF-LED 8, strobe LED 9, and buzzer 113 shown in Fig. 1, and outputs the control signal. The sub LCD 1 is a display portion for displaying the maximum number for photographing, for example. The LCD driver 111 is a drive circuit, which drives the sub LCD 1 by receiving the output signal of the SUB-CPU 109. The AF-LED 8 is an LED for displaying a focused state of photographing. In addition, the AF-LED8 and the strobe LED 9 can be used for another display such as memory card accessing. The operation key unit 115 that SW1-13(Fig. 1) are disposed is a key circuit to be operated by a user. The remote control light receiving portion 6 receives a signal of a remote control sender to be operated by a user.

The voice unit 105 comprises the microphone 1153, which inputs a voice signal by a user, the microphone AMP 1152, which amplifies the input voice signal, the voice record circuit 1151, which records the amplified voice signal, the voice reproduction circuit 1161, which converts the recorded voice signal to a signal capable of outputting from a speaker, the audio AMP 1162, which amplifies the converted voice signal and drives the speaker, and the speaker 1163, which outputs a voice signal.

Hereinafter, characteristic functions and structures of the imaging apparatus (digital camera) according to the present embodiment will be described with reference to FIGS. 1, 2.

In this embodiment, a user can record an arbitrary letter string in a photographed image by selecting a setting screen to be displayed on a monitor. In addition, the letter string recorded in the photographed image can be displayed.

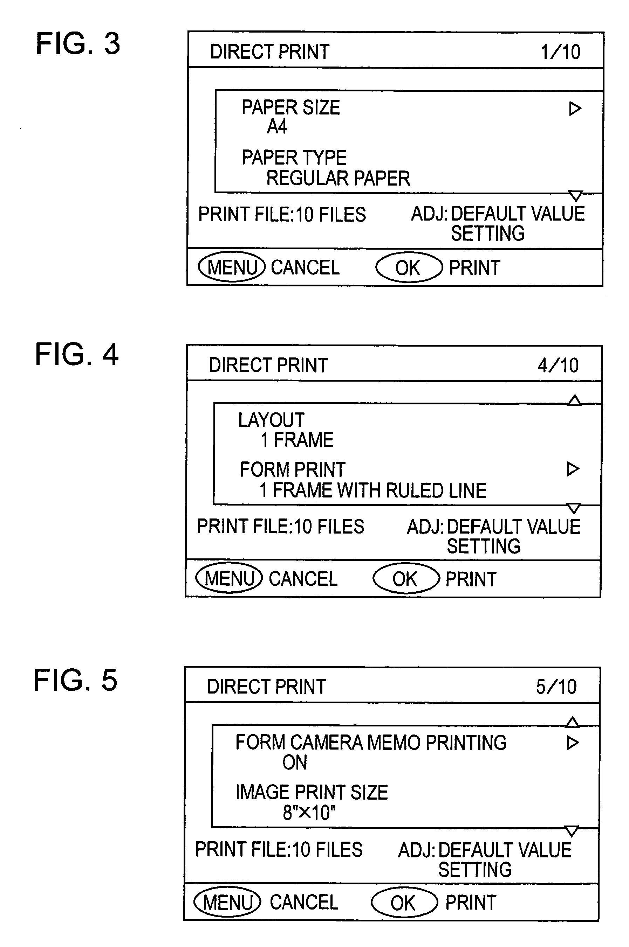

Fig. 3 shows one example of a setting screen to be displayed on a monitor of the imaging apparatus according to the present embodiment. Fig. 4 shows another example of a setting screen to be displayed on a monitor of the imaging apparatus according to the present embodiment. Fig. 5 is another example of a setting screen to be displayed on a monitor of the imaging apparatus according to the present embodiment. First, it will be explained when an arbitrary letter string corresponding to image data is a camera memo.

If the digital camera is connected to the printer, accessible printer setting items are sent from the printer to the camera. The information, for example, the paper size responds to A4, 2L-size, and L-size, the paper type responds to a regular paper and photo paper, the layout responds to 1 frame, 2 frames (print 2 frames on a piece of paper), and an index, and the form print responds to 1 frame with ruled lines and 2 frames with ruled lines, the form camera memo printing (print character information of image) responds to ON and OFF, and the image print size responds to 8" × 10" and 10 × 7 (cm) is sent from the printer.

If a user selects a print image by the digital camera, the screen of the LCD monitor 10 (Fig. 1) becomes a print setting screen. Each of the print setting screens shown in Figs. 3-5 is displayed with colours. For instance, the orange portions or light blue portions are setting items such as "paper size", "paper type", "layout", "form print", "form camera memo printing" and "image print size". The dark blue portions indicate set values of the setting items such as "A4", "standard paper", "1 frame", "1 frame with ruled lines", "ON", and "8" × 10". (However, the attached drawings are monotone images; thus, they are not displayed with colours).

Fig. 3 illustrates a setting screen when the setting item selected by a user ("paper size" displayed with orange) is the first item in the entire items (here, 10 items). Fig. 4 illustrates a setting screen of "form print" of the fourth item. Fig. 5 illustrates a setting screen of "form camera memo printing" of the fifth item.

Since the digital camera comprises a function, which displays an arbitrary letter string of a photographed image, a display item, which selects whether or not to print an arbitrary letter string (form camera memo printing), is displayed, as shown in Fig. 5.

If the digital camera does not comprise a function, which displays an arbitrary letter string of a photographed image, the display item, which selects whether or not to print an arbitrary letter string (form camera memo printing) shown in Fig. 5, is not displayed.

Next, it will be explained when an arbitrary letter string corresponding to image data is a photographing setting (ISO sensitivity setting) camera memo.

In this case, as a setting item, photographing ISO sensitivity setting (AUTO, ISO100, and ISO200) can be displayed, and selected setting can be recorded in a photographed image. Also, ISO sensitivity (AUTO, ISO100, and ISO200) of a photographed image can be displayed, and selected setting can be recorded in a photographed image.

If the camera is connected to the printer, print settable items are sent from the printer to the camera. The information, for example, the paper size responds to A4, 2L-size and L-size, the paper type responds to a standard paper and photo paper, the layout responds to 1 frame, 2 frames (print 2 frames on a piece of paper) and index, and the photographing ISO sensitivity print responds to ON and OFF is sent from the printer.

If a user selects a print image by the digital camera, a print setting screen is obtained. This digital camera has a function, which displays contents of ISO sensitivity setting of a photographed image, so a display item, which selects whether or not to print an arbitrary letter string (ISO sensitivity setting printing), is displayed on the print setting screen.

Generally, in the digital camera according to the present embodiment, a first determination device determines whether or not a printer has a function, which prints an arbitrary letter string of a photographed image, and if it is determined that the printer does not have the function, which prints an arbitrary letter string of a photographed image, the display item, which selects whether or not to print an arbitrary letter string (ISO sensitivity setting printing), is not displayed on the print setting screen.

Moreover, in the digital camera according to the present embodiment, generally, a second determination device determines whether or not a digital camera has a function, which displays an arbitrary letter string of a photographed image, and if it is determined that the digital camera does not have the function, which displays an arbitrary letter string of a photographed image, the display item, which selects whether or not to print an arbitrary letter string (ISO sensitivity setting printing), is not displayed on the print setting screen.

Hereinafter, operations according to the embodiment of the present invention will be described.

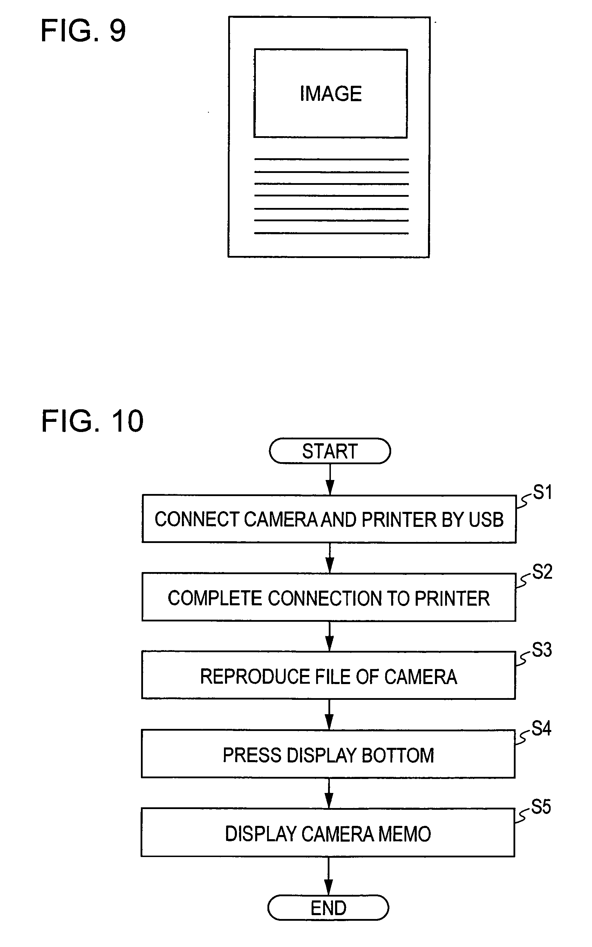

Fig. 10 is a flow chart showing one example of a process procedure till character information corresponding to image data is displayed in the imaging apparatus according to the present embodiment.

First, a user connects the USB connector 122 of the camera (Fig. 2) to the printer by a USB cable (step S1). Thereby, communication with the printer is started, and the connection process is completed (step S2).

Next, the CPU block 1043 reproduces a file recorded in the digital camera. Specifically, the CPU block 1043 loads image data recorded in the Local-SRAM 1044, or memory card, LAN card, wireless LAN card, Bluetooth standard card, etc., through the memory card socket 121, and sends the data to the LCD monitor 10 to display the image (step S3).

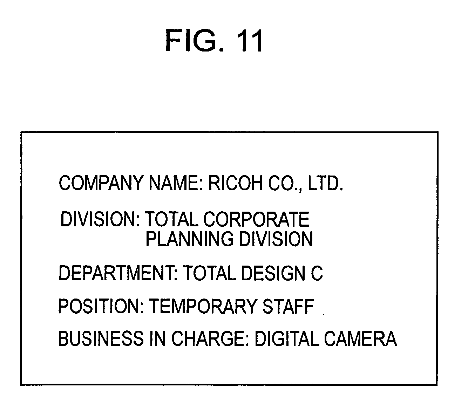

In this case, the user presses the DISPLAY-SW (SW9, Fig. 1) (step S4). The CPU block 1043 thereby refers to header information of a display file, and reads out camera memo information, and then displays the contents of the camera memo information on the image of the file data to be reproduced on the LCD monitor 10, as shown in Fig. 11 (step S5).

Fig. 11 is an explanation view showing a display state of the camera memo information in the imaging apparatus according to the present embodiment.

As shown in Fig. 11, when the user presses the DISPLY-SW (SW9, Fig. 1), the file data is reproduced, and also the contents of the camera memo information is displayed on the image of the file data of the LCD monitor 10.

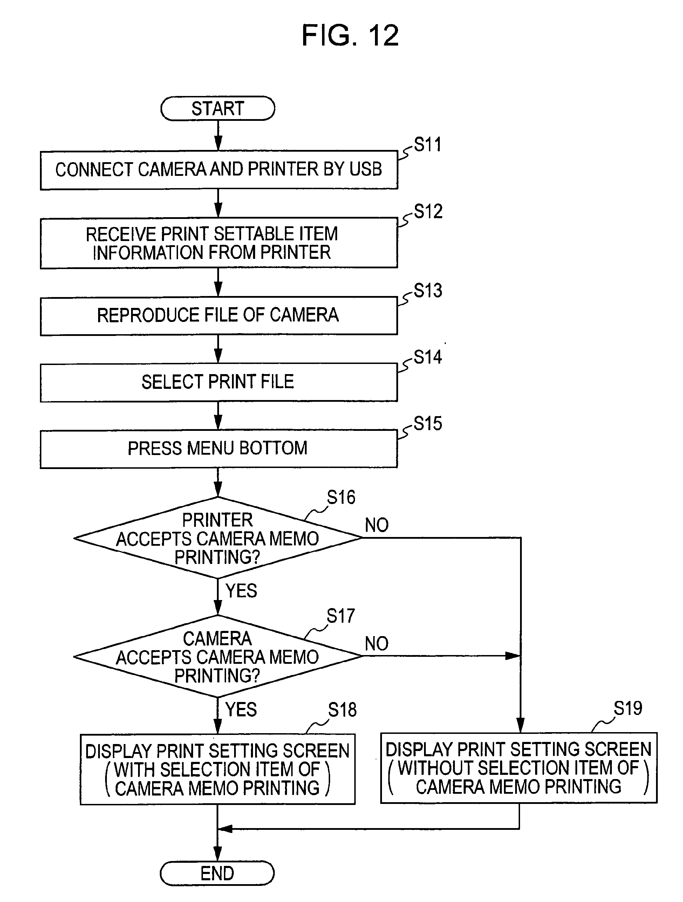

Fig. 12 is a flow chart showing one example of a process procedure till it is determined whether or not a print setting item is displayed in the imaging apparatus according to the present embodiment.

First, the user connects the USB connector 122 of the camera (Fig. 2) to the printer by a USB cable (step S11).

The CPU block 1043 thereby receives accessible print setting items to be sent from the printer to the digital camera (step S12). In this case, the accessible print setting items of the printer (print settable items to be sent to the digital camera) are as follows.

The paper size responds to A4, 2L-size, and L-size. The paper type responds to a standard paper and photo paper. The layout responds to 1 frame and 2 frames (print 2 frames on a piece of paper), and index. The form print responds to 1 frame with ruled lines (print image and ruled line) and 2 frames with ruled lines. The form camera memo printing (print character information of image) responds to ON and OFF. The image print size responds to 8" × 10" and 10 × 7 (cm).

If the receiving of the print settable items is completed, next, the CPU block 1043 reproduces a file recorded in the digital camera. More particularly, the CPU block 1043 loads image data recorded in the Local-SRAM (1044), or memory card, LAN card, wireless LAN card, Bluetooth standard card, etc., through the memory card socket 121, and sends the data to the LCD monitor 10 to display the image (step S13).

Next, the user appropriately presses the left image confirmation SW (SW11, Fig. 1) and the right SW (SW8, FIG 1) of the digital camera to select a print image to be printed (step S 14).

Next, if the user presses the MENU-SW (SW 6, Fig. 1) of the digital camera, the CPU block 1043 refers to the accessible print setting items received from the printer, and displays the print setting screen on the LCD monitor 10 (step S15). In addition, the meaning of the form print and the print setting screen are as stated above.

Next, the first determination device included in the control program of ROM 108 refers to the print settable items received from the printer, and examines whether or not the printer responds to the camera memo printing, and if it is determined that the printer responds to the camera memo printing, the flow moves on step S 17, and if it is determined that the printer does not respond to the camera memo printing, the flow goes on to step S 19 (step S16).

At step S 17, the second determination device refers to the control program of ROM 108 (Fig. 2), and examines whether or not the digital camera responds to the camera memo printing, and if it is determined that the digital camera responds to the camera memo printing, the flow moves on step S 18, and if the digital camera responds to the camera memo printing the flow goes on to step S 19 (step S16).

At step S 18, the CPU block 1043 displays the print setting screen having the selection item of the camera memo printing on the LCD monitor 10, and the process is completed.

At step S19, the CPU block 1043 displays the print setting screen without having the selection item of the camera memo printing on the LCD monitor 10, and the process is completed. In this case, since the digital camera and the printer respond to the camera memo display function, the selection item, which selects whether or not to print an arbitrary letter string, i.e., the display item having the selection item of the camera memo printing (form camera memo printing) is displayed on the LCD monitor 10.

Next, another embodiment of the present invention will be explained.

In this embodiment, an arbitrary letter string can be recorded in a photographed image by selecting a setting screen to be displayed on a monitor with a user. In addition, the arbitrary letter string recorded in the photographed image can be displayed.

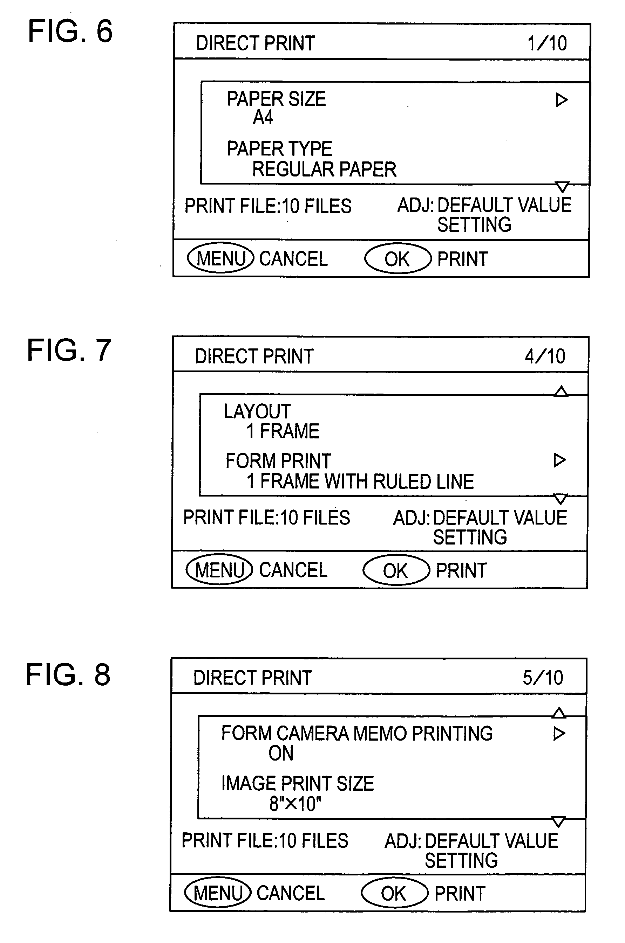

Fig. 6 illustrates one example of a setting screen to be displayed on a monitor of the imaging apparatus according to the present embodiment.

Fig. 7 illustrates another example of a setting screen to be displayed on a monitor of the imaging apparatus according to the present embodiment.

Fig. 8 illustrates another example of a setting screen to be displayed on a monitor of the imaging apparatus according to the present embodiment (however, Figs. 6, 7, 8 are the same as Figs. 3, 4, 5, respectively).

Hereinbelow, it will be explained when two layout setting items are included.

If the digital camera is connected to the printer, accessible print setting items are sent from the printer to the digital camera. The information, for instance, the paper size responds to A4, 2L-size, and L-size, the paper type responds to a standard paper and photo paper, the layout responds to 1 frame and 2 frames (print 2 frames on a piece of paper), and index, the form print responds to 1 frame with ruled lines (print image and rule lines) and 2 frames with ruled lines, the form camera memo printing (print character information of image) responds to ON and OFF, and the image print size responds to 8" × 10" and 10 × 7cm is sent from the printer.

Fig. 9 is an explanation view for explaining a print format of form print, which is one of the print setting items of the imaging apparatus according to the present embodiment.

In this case, the form print is a function, which prints a selected image and ruled lines in line. The form camera memo printing is effective if the form print is set, and the character information of the image is printed. If the form print is set, (if ON is selected), the layout item of the setting item is ignored although the layout item of the setting item is selected (in this case, the layout selected by the form print is printed).

If the user selects a print image by the digital camera, the print setting screen is obtained. Each of the print setting screens illustrated in Figs. 6, 7, 8 is displayed with colours. The orange portions and light blue portions indicate setting items. The dark blue portions indicate set values of the setting items (however, the accompanying drawings are displayed with monotone).

Fig. 6 is a setting screen when the setting item selected by the user (paper size displayed with orange colour) is the first item in the entire items (here, 10 items). Fig. 7 is a setting screen of the fourth item of the items. Fig. 8 is a setting screen of the fifth item of the items. In this case, as shown in Fig. 7, since 1 frame with ruled lines is selected in the form print of the setting items, the form camera memo printing becomes available, and the item of the camera memo printing is displayed as shown in Fig. 8.

If OFF is selected in the setting of the form print, the camera memo printing can not be conducted. Therefore, the form camera memo printing is not displayed on the print setting screen.

Next, it will be explained when one layout setting item is included. If the digital camera is connected to the printer, the accessible print setting items are sent from the printer to the camera. The information, for example, the paper size responds to A4, 2L-size, and L-size, the paper type responds to a standard paper and photo paper, the layout responds to 1 frame, 1 frames with ruled lines (print image and ruled lines), and index, the form camera memo printing (print character information of image) responds to ON and OFF, and the image print size responds to 8" × 10" and 10 × 7cm is sent from the printer.

In this case, 1 frame with ruled lines of the layout is the same as the print format of the form print illustrated in Fig. 9, and is a function, which prints a selected image and ruled lines in line. If 1 frame with ruled lines is only selected in the layout of the setting item, the camera memo printing can be conducted. If the user selects a print image by the digital camera, the print setting screen is obtained. With this print setting, if 1 frame with ruled lines is selected as the layout of the setting item, the form camera memo printing becomes available, and the item of the camera memo printing is displayed on the print setting screen as described above. However, if a setting item other than 1 frame with ruled lines (i.e., 1 frame or index) is selected, the form camera memo printing can not be conducted. In this case, the form camera memo printing is not displayed on the print setting screen.

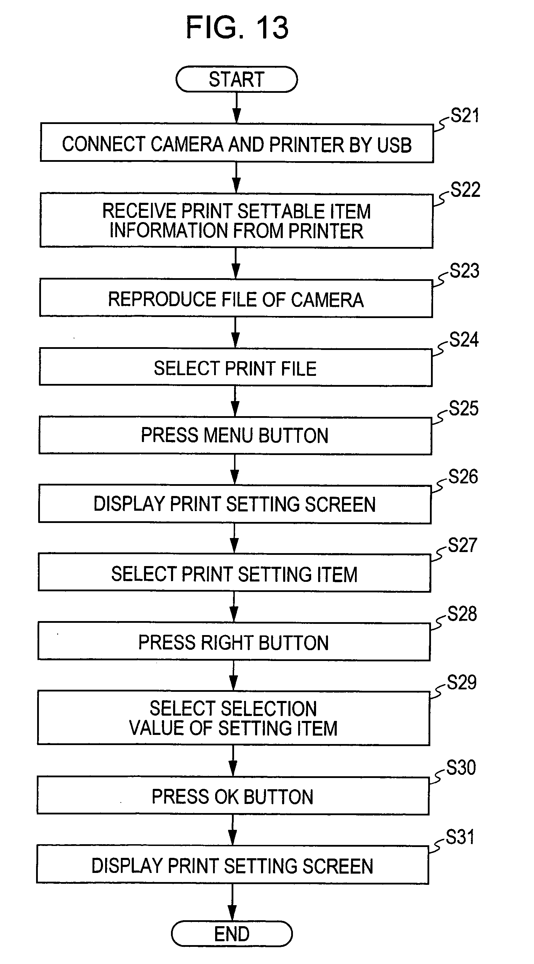

Fig. 13 is a flow chart illustrating one example of a process procedure till a print setting screen is displayed in the imaging apparatus according to the present embodiment.

At first, the user connects the USB connector 122 of the camera (Fig. 2) to the printer by a USB cable (step S21). Thereby, the CPU block 1043 receives accessible print setting items sent from the printer to the digital camera (step S22). In this case, the accessible print setting items of the printer (print settable items to be sent to the digital camera) are as follows.

The paper size responds to A4, 2L-size, and L-size. The paper type responds to a standard paper and photo paper. The layout responds to 1 frame and 2 frames (print 2 frames on a piece of paper), and index. The form print responds to 1 frame with ruled lines (print image and ruled lines) and 2 frames with ruled lines. The form camera memo printing (print character information of image) responds to ON and OFF. The image print size responds to 8" × 10" and 10 × 7 (cm).

If the receiving of the print settable items is completed, next, the CPU block 1043 reproduces a file recorded in the digital camera. More particularly, the CPU block 1043 loads image data stored in the Local-SRAM 1044, or memory card, LAN card, wireless LAN card, Bluetooth standard card, etc., through the memory card socket 121, and sends the data to the LCD monitor 10 to display the image (step S23).

Next, the user appropriately presses the left image confirmation SW (SW 11, Fig. 1) and the right SW (SW8, Fig. 1) of the digital camera to select a print image to be printed (step S24).

Next, the user presses the MENU-SW (SW6, Fig. 1) of the digital camera (step S25). In addition, the meaning of the form print and the print setting screen are as described above. Thereby, the CPU block 1043 refers to the print settable items received from the printer, and displays the print setting screen on the LCD monitor 10 (step S26). In this case, the print setting screen is as shown in Figs. 6, 7, 8. The values set in the print setting screens are the values set last time in case of previous connection.

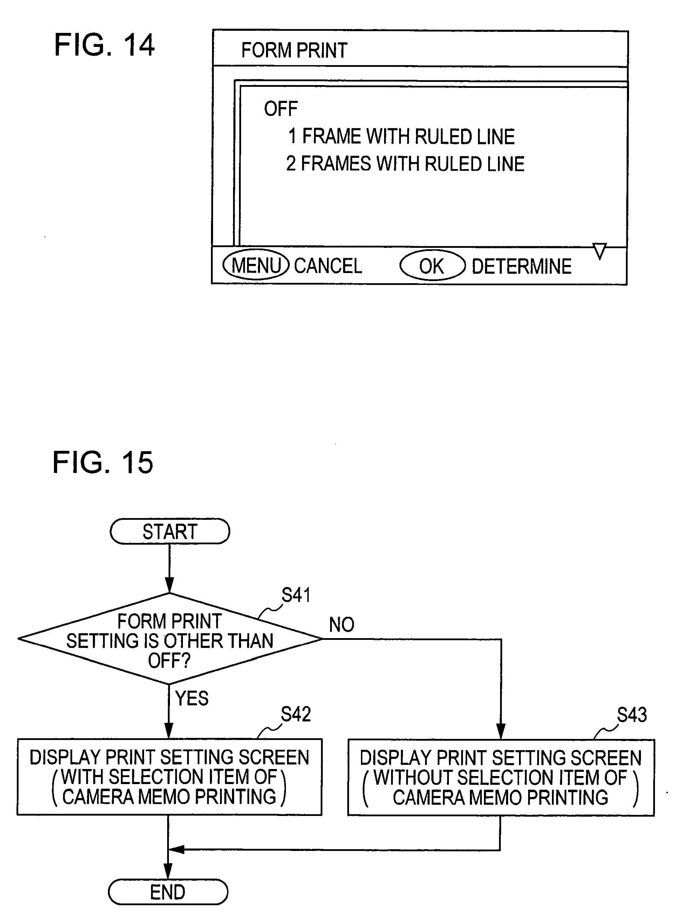

Next, the user appropriately presses the left image confirmation SW (SW 11, Fig. 1) and the right SW (SW 8, Fig. 1) of the digital camera to select a print image to be printed (step S26). Next, the user appropriately presses up/strobe SW (SW7) and down/ micro SW (SW10), and selects an item (step S27). Next, if the user presses the right SW (SW 8), the CPU block 1043 displays a screen, which selects a specific selected value of the selected item, on the LDC monitor 10 (step S28) (Fig. 14).

Next, the user appropriately presses the up/strobe SW (SW 7) and the down/strobe SW (SW10), and selects a selected value of item (step S29). Next, the user presses the OK-SW (SW 12) (step S30). Thereby, the CPU block 1043 displays the print setting screen reflecting the selected values of the selected items on the LCD monitor 10 (step S31).

Next, it will be explained for a method, which determines whether or not to display a camera memo on a print setting screen.

Fig. 15 is a flow chart illustrating one example of a process procedure till it is determined whether or not the camera memo is displayed on the print setting screen in the imaging apparatus according to the present embodiment.

First, it is examined whether or not the form print setting is other than OFF. If the form print setting is other than OFF, the flow moves on step S42, and if the form print setting is OFF, the flow moves on step S43 (step S41). In this case, since 1 frame with ruled lines is selected as the form print as shown in Fig. 14, the form print setting is other than OFF.

At step S42, since the form camera memo printing is available, the CPU block 1043 displays the item of the form camera memo printing (reference to Fig. 8) on the LCD monitor 10, and the process is completed.

At step S43, since the form camera memo printing is not available, the CPU block 1043 displays the print setting screen without having the item of the form camera memo on the LCD monitor 10, and the process is completed.

Fig. 14 is an explanation view showing one example of a print setting screen when the form camera memo printing is available in the imaging apparatus according to the present embodiment.

In the print setting screen shown in Fig. 14, the item, OFF, is not selected and 1 frame with ruled lines, which is the item other than OFF, is selected in the selected screen of the form print setting.

In addition, at least a part of the process of each of the structural elements of the imaging apparatus according to the present invention is conducted by a computer program, and the programs, which perform the above processes by the process procedures shown in the flow chart of Figs. 10, 12, 13 with a computer, can be stored and disposed in a computer readable recording medium such as a semiconductor memory, CD-ROM, and magnetic tape. A computer containing at least a micro computer, personal computer, and general computer as a category can perform the above program by reading out the program from the recording medium.

## Claims

1. An imaging apparatus including an imaging device, which images a photograph subject to output as image data, a recording device (1044), which records the image data as an image file, a sending device, which sends data to an external printing device, a device, which displays arbitrary character information recorded in the image data, a device (1043), which receives print settable information of the external printing device, and a device (10), which displays a print setting screen, **characterized by** comprising:
a first determination device configured to determine whether or not the external printing device responds to a function, which prints the arbitrary character information recorded in the image data;
a second determination device configured to determine whether or not the imaging apparatus has a function, which displays the arbitrary character information recorded in the image data; and
a display device configured to display a print setting item, which allows a user to select whether or not to print the arbitrary character information, on the print setting screen, if it is determined that the external printing device responds to the function, which prints the arbitrary character information recorded in the image data, by the first determination device and if it is determined that the imaging apparatus has the function, which displays the arbitrary character information recorded in the image data, by the second determination device, when printing.

2. An imaging apparatus according to claim 1, wherein the first determination device refers to an accessible print setting item of the external printing device to be sent from the external printing device when determining.

3. An imaging apparatus according to claim 1 or claim 2, wherein the second determination device refers to a control program when determining.

4. An imaging apparatus including an imaging device, which images a photographic subject to output as image data, a recording device (1044), which records the image data as an image file, a sending device, which sends data to an external printing device, and a device (10), which displays a print setting screen corresponding to an accessible print setting item of the external printing device received from the external printing device, **characterized by** comprising:
a display device configured to display a print setting item, which allows a user to select whether or not to print arbitrary character information, on the print setting screen, only if a layout capable of printing an arbitrary character is selected in a layout setting of the print setting item.

5. A display method of an imaging apparatus including an imaging device, which images a photographic subject to output as image data, a recording device (1044), which records the image data as an image file, a sending device, which sends data to an external printing device, a device, which displays arbitrary character information recorded in the image data, a device (1043), which receives print settable information of the external printing device, and a device (10), which displays a print setting screen, **characterized by** comprising:
a first determination step of determining whether or not the external printing device responds to a function, which prints the arbitrary character information recorded in the image data,
a second determination step of determining whether or not the imaging apparatus has a function, which displays the arbitrary character information recorded in the image data, and
a display step of displaying a print setting item, which allows a user to select whether or not to print the arbitrary character information, on the print setting screen, only if it is determined that the external printing device responds to the function, which prints the arbitrary character information recorded in the image data, by the first determination step, and it is determined that the imaging apparatus has the function, which displays the arbitrary character information recorded in the image data, by the second determination step, when printing.

6. A display method according to claim 5, wherein the first determination step refers to an accessible print setting item of the external printing device to be sent from the external printing device when determining.

7. A display method according to claim 5 or claim 6, wherein the second determination step refers to a control program of the imaging apparatus when determining.

8. A display method of an imaging apparatus including an imaging device, which images a photographic subject to output as image data, a recording device (1044), which records the image data as an image file, a sending device, which sends data to an external printing device, and a device (10), which displays a print setting screen corresponding to an accessible print setting item of the external printing device received from the external printing device, **characterized by** comprising:
a display step of displaying a print setting item, which allows a user to select whether or not to print arbitrary character information, on the print setting screen, only if a layout capable of printing an arbitrary character is selected in a layout setting of the print setting item.

9. A computer program, for use in an imaging apparatus including an imaging device, which images a photographic subject to output as image data, a recording device (1044), which records the image data as an image file, a sending device, which sends data to an external printing device, a device, which displays arbitrary character information recorded in the image data, a device (1043), which receives print settable information of the external printing device, and a device (10), which displays a print setting screen, the program comprising code means that instructs the imaging apparatus to effect a method according to any one of claims 5 to 7.

10. A computer program for use in an imaging apparatus including an imaging device, which images a photographic subject to output as image data, a recording device (1044), which records the image data as an image file, a sending device, which sends data to an external printing device, and a device (10), which displays a print setting screen corresponding to an accessible print setting item of the external printing device received from the external printing device, the program comprising code means that instructs the imaging apparatus to effect a method according to claim 8.
